# EUROPÄISCHE PATENTSCHRIFT

(11) **EP 1 525 410 B1**
(45) Veröffentlichungstag und Bekanntmachung des Hinweises auf die Patenterteilung: **12.09.2007**
(21) Anmeldenummer: 03763865.7
(22) Anmeldetag: 15.07.2003
(51) Int. Cl.: F16F 13/14

(54) **HYDRAULISCH DÄMPFENDE BUCHSE**
HYDRAULIC DAMPING BUSH
DOUILLE A AMORTISSEMENT HYDRAULIQUE

(30) Priorität: 17.07.2002 DE 10232393
(43) Veröffentlichungstag der Anmeldung: 27.04.2005
(73) Patentinhaber: Trelleborg Automotive Technical Centre GmbH, 56203 Höhr-Grenzhausen (DE)
(72) Erfinder: GRAEVE, Arndt, 56068 Koblenz (DE); EISEL, Eric, 56170 Bendorf (DE)
(74) Vertreter: Preissner, Nicolaus
(86) Internationale Anmeldenummer: PCT/EP2003/007659
(87) Internationale Veröffentlichungsnummer: WO 2004/007988

(56) Entgegenhaltungen:
- DE-A- 19 632 098
- US-A- 5 188 346
- US-A- 6 102 380
- US-A1- 2002 020 950

## Beschreibung

Die Erfindung betrifft eine hydraulisch dämpfende Buchse mit einem äußeren Lagerteil und einem inneren Lagerteil, die durch einen Federkörper aus einem elastomeren Material gegeneinander abgestützt sind, wobei der Federkörper mindestens eine Arbeitskammer begrenzt, die mit einer hydraulischen Flüssigkeit gefüllt ist und über einen Dämpfungskanal mit mindestens einer Ausgleichskammer verbunden ist, und mit einer der Arbeitskammer zugeordneten Entkopplungsmembran, die beidseits durch die hydraulische Flüssigkeit beaufschlagt ist.

Eine derartige hydraulische Buchse ist aus der EP 0 600 358 B1 bekannt. Die bekannte Buchse weist eine obenliegende Kammer und eine untenliegende Kammer auf, die jeweils mit hydraulischer Flüssigkeit gefüllt sind. Die beiden Kammern sind durch einen am Außenumfang der Buchse verlaufenden Dämpfungskanal miteinander verbunden. Weiterhin verbindet ein Ringraum die beiden Kammern, in dem eine Entkopplungseinrichtung vorgesehen ist. Die Entkopplungseinrichtung weist einen in den Ringraum eingebrachten Einsatz auf, der eine beidseits mit der hydraulischen Flüssigkeit beaufschlagte Entkopplungsmembran aufnimmt.

Der Erfindung liegt die Aufgabe zugrunde, eine hydraulisch dämpfende Buchse der eingangs genannten Art vorzuschlagen, die eine Entkopplungswirkung bis zu hohen Frequenzen bei geringen baulichen Abmessungen aufweisen soll.

Zur Lösung dieser Aufgabe wird erfindungsgemäß bei einer hydraulisch dämpfenden Buchse der eingangs genannten Art vorgesehen, daß die Entkopplungsmembran sich in Umfangsrichtung erstreckend und radial abragend ausgebildet ist, daß der Entkopplungsmembran eine bezüglich der Arbeitskammer in Axialrichtung versetzte Entkopplungskammer zugeordnet ist und daß sich die Ausgleichskammer am Außenumfang der Buchse in Umfangsrichtung erstreckt.

Durch die erfindungsgemäße Anordnung der Arbeitskammer und der Ausgleichskammer wird einerseits eine relativ große Entkopplerfläche sowie andererseits ein kurzer Entkopplungskanal erzielt. Beide Maßnahmen tragen dazu bei, daß eine Entkopplungswirkung bei kleinen Amplituden bis zu hohen Frequenzen erreicht wird. Hierdurch wird eine geringe dynamische Steifigkeit der erfindungsgemäßen Buchse erhalten. Hierbei erstreckt sich die Entkopplungsmembran in einem Umfangssegment, wodurch sich eine große Entkopplerfläche ergibt. Durch die weiterhin vorgesehene Funktionstrennung zwischen Entkopplungskammer und Ausgleichskammer kann die Entkopplungskammer ein relativ kleines Volumen aufweisen, wodurch nur ein geringer Bauraum benötigt wird.

Vorteilhafte Ausgestaltungen der Erfindung ergeben sich aus den Unteransprüchen.

Vorteilhaft weist die Entkopplungskammer eine Abdeckkappe aus elastischem Material auf.

Bei einer vorteilhaften Weiterbildung weist die Entkopplungskammer eine Abdeckkappe auf, die mit einem Wellenprofil ausgebildet ist. Hierdurch wird eine hohe Nachgiebigkeit der Entkopplungskammer erzielt.

In vorteilhafter Ausgestaltung sind die Entkopplungskammer und die Ausgleichskammer und/oder der Dämpfungskanal durch einen Druckausgleichskanal miteinander verbunden, wodurch ein statischer Druckausgleich zwischen den Kammern erzielt wird.

In vorteilhafter Ausgestaltung ist ein hohlzylinderförmiger Buchsenkäfig vorgesehen, der radial abragende, das äußere Lagerteil abstützende Stirnwände aufweist.

Weiterhin kann vorteilhaft ein an dem Buchsenkäfig einsetzbarer Einsatz vorgesehen sein, der einen Entkopplungskäfig zur Aufnahme der Entkopplungsmembran aufweist.

Sowohl der Buchsenkäfig und/oder der Einsatz sind vorteilhaft aus Kunststoff hergestellt.

Bei einer vorteilhaften Weiterbildung erstreckt sich der Einsatz segmentartig in Umfangsrichtung und ist in einer am Buchsenkäfig vorgesehenen Aussparung aufgenommen.

Vorteilhaft kann der Entkopplungskäfig in Radialrichtung verlaufende beabstandete Streben aufweisen.

In vorteilhafter Ausgestaltung der Erfindung ist an dem Einsatz eine Umlenkung des Dämpfungskanals vorgesehen.

Durch unterschiedliche Einsätze können in einfacher Weise die Dämpfungseigenschaften der erfindungsgemäßen Buchse variiert werden.

Vorteilhaft ist der Dämpfungskanal am Außenumfang des Buchsenkäfigs einvulkanisiert. Der Dämpfungskanal weist durch seine Anordnung am Außenumfang des Buchsenkäfigs und durch die Umlenkung am Einsatz eine relativ große Länge auf.

Bei einer vorteilhaften Ausgestaltung sind zwei in Axialrichtung beabstandete Entkopplungsmembranen vorgesehen, denen jeweils eine Entkopplungskammer zugeordnet ist.

In weiterer vorteilhafter Ausgestaltung weist die Stirnwand des Buchsenkäfigs eine Öffnung auf, die von der Abdeckkappe der Entkopplungskammer abgedeckt wird.

Die Herstellung der erfindungsgemäßen Buchse kann vorteilhaft dadurch erfolgen, daß ein einteiliger Vulkanisatkörper vorgesehen ist, an dem der Federkörper und/oder der Dämpfungskanal und/oder die Abdeckkappe ausgebildet ist.

In weiterer vorteilhafter Ausgestaltung ist das innere Lagerteil gegenüber dem äußeren Lagerteil exzentrisch angeordnet.

Nachfolgend wird die Erfindung anhand von Ausführungsbeispielen näher erläutert, die in schematischer Weise in der Zeichnung dargestellt sind. Hierbei zeigen:
- Fig. 1: einen Vertikalschnitt in Axialrichtung einer ersten erfindungsgemäßen Ausführungsform;
- Fig. 2: einen Schnitt längs der Linie II-II in Fig. 1;
- Fig. 3: eine Teildarstellung der Entkopplungskammer einer zweiten erfindungsgemäßen Ausführungsform;
- Fig. 4: eine perspektivische Ansicht des inneren Lagerteiles, des Buchsenkäfigs und des Einsatzes der Buchse gemäß Fig. 1 vor dem Einbringen des Vulkanisatkörpers;

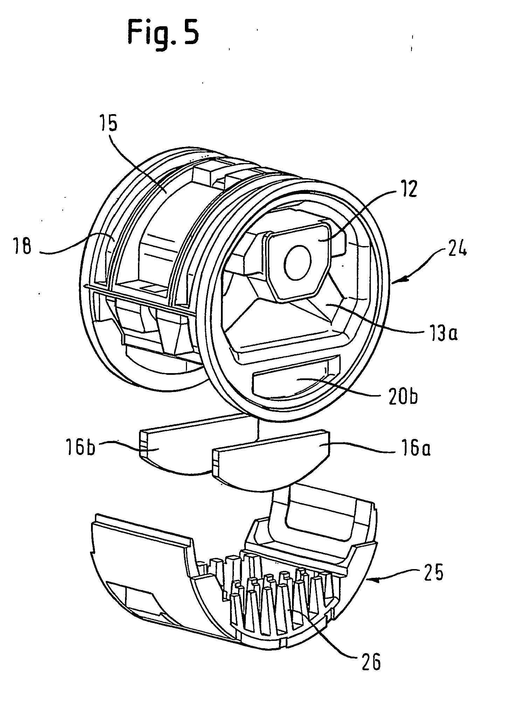

- Fig. 5: eine perspektivische Ansicht des Buchsenkäfigs und des Einsatzes nach dem Einbringen des Vulkanisatkörpers;
- Fig. 6: eine Seitenansicht des Einsatzes und
- Fig. 7: eine Draufsicht auf den Einsatz.

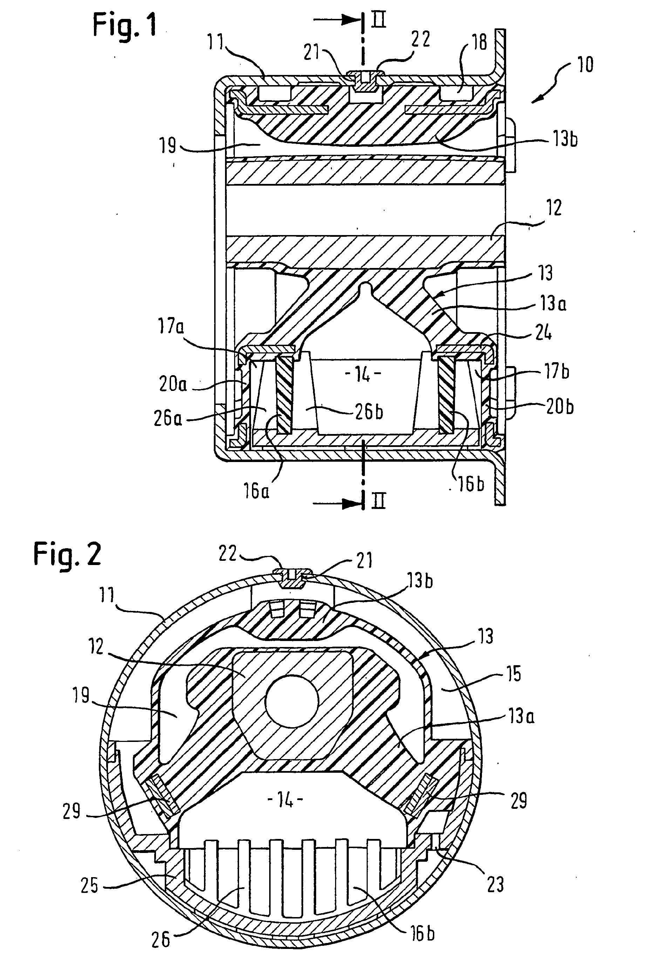

Die in den Fig. 1 und 2 dargestellte hydraulisch dämpfende Buchse 10 weist ein hohlzylinderförmiges äußeres Lagerteil 11 auf, in dem ein inneres Lagerteil 12 über einen Federkörper 13a aus einem elastomeren Material abgestützt ist. Der Federkörper 13a ist Teil eines einteiligen Vulkanisatkörpers 13, der an einem hohlzylinderförmigen Buchsenkäfig 24 angespritzt ist.

Der Vulkanisatkörper 13 weist einen Deckbereich 13b auf, der mit dem Federkörper 13a einen Hohlraum 19 begrenzt. In dem Deckbereich 13b ist ein Dämpfungskanal 18 eingeformt, der sich in Umfangsrichtung erstreckt. Am Außenumfang wird der Dämpfungskanal 18 durch die Innenseite des äußeren Lagerteiles 11 begrenzt.

Der Federkörper 13a begrenzt eine Arbeitskammer 14, die über den Dämpfungskanal 18 mit einer Ausgleichskammer 15 verbunden ist. Die Ausgleichskammer 15 wird an ihrer Innenseite durch den Deckbereich 13b des Vulkanisatkörpers 13 und an ihrer Außenseite durch das äußere Lagerteil 11 begrenzt. Die Ausgleichskammer 15 erstreckt sich am Außenumfang der Buchse 10 etwa über deren halben Umfang.

Der Arbeitskammer 14 sind zwei Entkopplungsmembranen 16a, 16b zugeordnet, die in Axialrichtung versetzt zueinander angeordnet sind. Die Entkopplungsmembranen 16a, 16b sind in einem am Buchsenkäfig 24 festgelegten Einsatz 25 aufgenommen, der mit Abstand zueinander angeordnete in Radialrichtung verlaufende Streben 26 aufweist, die einen Entkopplungskäfig 33 begrenzen. Der Einsatz 25 begrenzt die Arbeitskammer 14 an ihrer Unterseite.

Die Entkopplungsmembranen 16a, 16b erstrecken sich in Umfangsrichtung und sind radial abragend ausgebildet. Hierdurch wird eine relativ große Entkopplerfläche erzielt.

Den Entkopplungsmembranen 16a, 16b ist jeweils eine bezüglich der Arbeitskammer 14 in Axialrichtung versetzte Entkopplungskammer 17a, 17b zugeordnet, die an ihren Außenseiten jeweils durch eine elastische Abdeckkappe 20a, 20b begrenzt sind. Die elastische Abdeckkappe 20a, 20b ist einteilig mit dem Vulkanisatkörper 13 ausgebildet.

Die Entkopplungskammern 17a, 17b sind jeweils über einen Druckausgleichskanal 23 mit dem Dämpfungskanal 18, 18a verbunden.

An dem äußeren Lagerteil 11 ist eine Einfüllöffnung 21 vorgesehen, über die die Buchse 10 mit einer hydraulischen Flüssigkeit gefüllt werden kann. Die Einfüllöffnung 21 ist mit einem Verschluß 22 verschließbar.

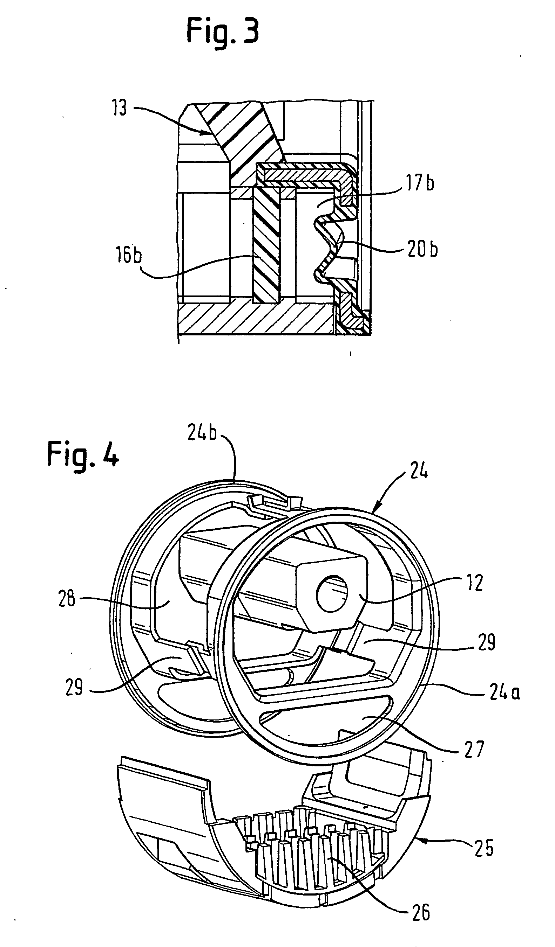

Fig. 3 zeigt ausschnittsweise eine weitere Ausführungsform einer erfindungsgemäßen Buchse, bei der die Abdeckkappen 20a, 20b jeweils ein Wellenprofil aufweisen. Hierdurch wird eine besonders große Nachgiebigkeit der Entkopplungskammern 17a, 17b erzielt.

Fig. 4 zeigt den Buchsenkäfig 24 und den hierin eingebrachten Einsatz 25 vor der Vulkanisation. Der Buchsenkäfig 24 ist aus Metall und der Einsatz 25 aus Kunststoff hergestellt. Der Buchsenkäfig 24 baut sich aus den Teilen 24a, 24b auf, die miteinander verbunden sind.

An dem Buchsenkäfig 24 ist eine Aussparung 27 vorgesehen, an der die Abdeckkappe 20a, 20b anvulkanisiert wird. Weiterhin begrenzen die Teile 24a, 24b des Buchsenkäfigs 24 eine sich in Umfangsrichtung erstreckende Aussparung 28, die nach der Vulkanisation durch das Deckteil 13b des Vulkanisatkörpers 13 abgedeckt ist. In diesem Bereich erstreckt sich die Ausgleichskammer 15.

Im Inneren des Buchsenkäfigs 24 ist das innere Lagerteil 12 aufgenommen, das sich über den Federkörper 13a an dem Buchsenkäfig 24 abstützt.

Wie weiterhin aus dieser Figur ersichtlich ist, sind die am Einsatz 25 vorgesehenen Streben 26 in Axialrichtung versetzt angeordnet, um beidseits die zwischenliegend aufgenommene Entkopplungsmembran 16a, 16b zu stützen. Somit begrenzen die Streben 26 den Entkopplungskäfig 33.

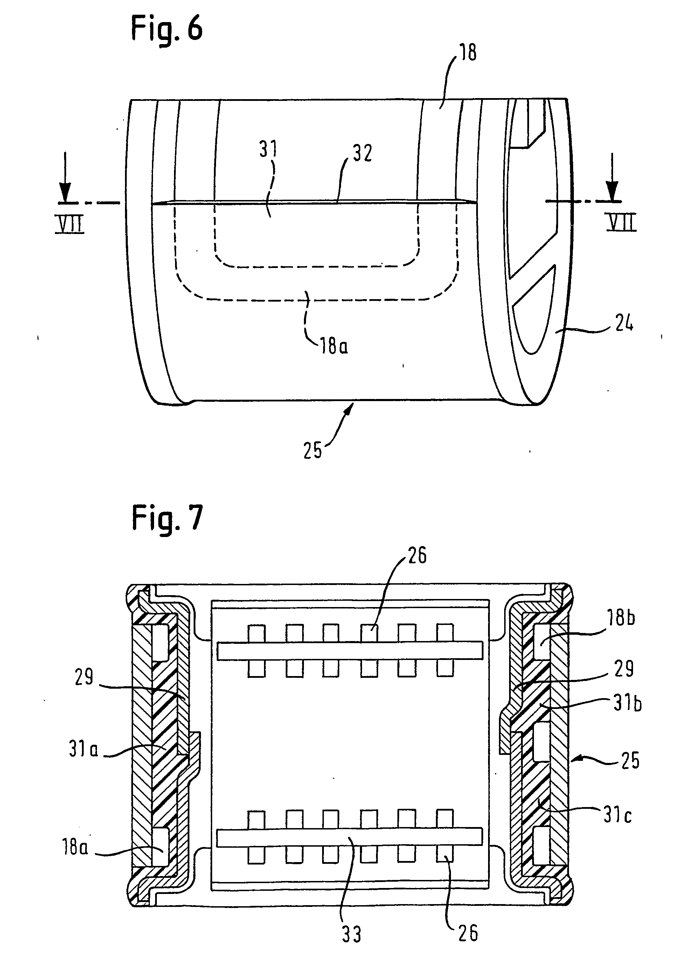

Die Fig. 6 und 7 verdeutlichen den näheren Aufbau des an dem Buchsenkäfig 24 aufgenommenen Einsatzes 25. Am Innenumfang des Einsatzes 25 sind Umlenkungen 18a, 18b für den Dämpfungskanal 18 vorgesehen. Innenseitig werden die Umlenkungen 18a, 18b des Dämpfungskanals 18 durch den Vulkanisationskörper 13 begrenzt, der an der Außenseite der Stege 29 des Buchsenkäfigs 24 aufgebracht ist. Im Bereich der Umlenkungen 18a, 18b weist der Vulkanisationskörper 13 radial abragende Zwischenteile 31a, 31b, 31c auf. Am Boden der Umlenkungen 18a, 18b ist in dem Einsatz 25 der Druckausgleichkanal 23 eingebracht.

Nachdem die Entkopplungsmembranen 16a, 16b eingebracht wurden, wird der Einsatz 25 in den vulkanisierten Buchsenkäfig 24 eingepreßt. Hierbei erfolgt eine Abdichtung zwischen dem Einsatz 25 und dem Buchsenkäfig 24 an einer Zwischenwand 32 aus elastomerem Material, die einteilig mit dem Vulkanisatkörper 13 ausgebildet ist. Somit sind separate Dichtungen entbehrlich.

Nach dem Einbringen des Einsatzes 25 in den Buchsenkäfig 24 wird das zusammengesetzte Teil in das äußere Lagerteil 11 eingebracht.

Die vorstehend beschriebene konstruktive Ausgestaltung der Buchse 10 bewirkt, daß eine Entkopplung bis zu hohen Frequenzen erreicht wird. Hierzu trägt einerseits die große Fläche der sich in Umfangsrichtung und in Radialrichtung erstreckenden Entkopplungsmembranen 16a, 16b und andererseits die kurzen Entkopplungskanäle bei, die durch die Anordnung der Entkopplungskammern 17a, 17b an den Seitenenden der Arbeitskammer 14 erreicht wird.

Weiterhin ist bei der erfindungsgemäßen Buchse eine Funktionstrennung zwischen den Entkopplungskammern 17a, 17b und der Ausgleichskammer 15 vorgesehen. Hierdurch können die Entkopplungskammern 17a, 17b ein relativ kleines Volumen aufweisen, wodurch die baulichen Abmessungen reduziert sind. Somit zeichnet sich die Buchse trotz großer Entkopplungsfläche durch geringe axiale Abmessungen aus.

Darüber hinaus weist der Dämpfungskanal 18, der sich am Außenumfang der Buchse 10 erstreckt, eine große Länge auf, was eine hohe Dämpfungswirkung bewirkt.

Schließlich ist die erfindungsgemäße Buchse 10 durch den einteiligen Vulkanisatkörper 13 in einfacher Weise herstellbar.

### Bezugszeichenliste

- 10: Buchse
- 11: äußeres Lagerteil
- 12: inneres Lagerteil
- 13: Vulkanisatkörper
- 13a: Federkörper
- 13b: Deckbereich
- 14: Arbeitskammer
- 15: Ausgleichskammer
- 16a: Entkopplungsmembran
- 16b: Entkopplungsmembran
- 17a: Entkopplungskammer
- 17b: Entkopplungskammer
- 18: Dämpfungskanal
- 18a: Umlenkung
- 19: Hohlraum
- 20: Abdeckkappe
- 21: Einfüllöffnung
- 22: Verschluß
- 23: Druckausgleichkanal
- 24: Buchsenkäfig
- 25: Einsatz
- 26: Strebe
- 27: Aussparung
- 28: Aussparung
- 29: Steg
- 30: Außenteil
- 31: Zwischenteil
- 32: Zwischenwand
- 33: Entkopplungskäfig

## Patentansprüche

1. Hydraulisch dämpfende Buchse (10) mit einem äußeren Lagerteil (11) und einem inneren Lagerteil (12), die durch einen Federkörper (13a) aus einem elastomeren Material gegeneinander abgestützt sind, wobei der Federkörper (13a) mindestens eine Arbeitskammer (14) begrenzt, die mit einer hydraulischen Flüssigkeit gefüllt ist und über einen Dämpfungskanal (18) mit mindestens einer Ausgleichskammer (15) verbunden ist, und mit einer der Arbeitskammer (14) zugeordneten Entkopplungsmembran (16a, 16b), die beidseits durch die hydraulische Flüssigkeit beaufschlagt ist, **dadurch gekennzeichnet, daß** die Entkopplungsmembran (16a, 16b) sich in Umfangsrichtung erstreckend und radial abragend ausgebildet ist, daß der Entkopplungsmembran (16a, 16b) eine bezüglich der Arbeitskammer (14) in Axialrichtung versetzte Entkopplungskammer (17a, 17b) zugeordnet ist und daß sich die Ausgleichskammer (15) am Außenumfang der Buchse (10) in Umfangsrichtung erstreckt.

2. Hydraulisch dämpfende Buchse nach Anspruch 1, **dadurch gekennzeichnet, daß** die Entkopplungskammer (17a, 17b) eine Abdeckkappe (20) aus elastischem Material aufweist.

3. Hydraulisch dämpfende Buchse nach Anspruch 1 oder 2, **dadurch gekennzeichnet, daß** die Entkopplungskammer (17a, 17b) eine Abdeckkappe (20) mit einem Wellenprofil aufweist.

4. Hydraulisch dämpfende Buchse nach einem der Ansprüche 1 bis 3, **dadurch gekennzeichnet, daß** die Entkopplungskammer (17a, 17b) und die Ausgleichskammer (15) und/oder der Dämpfungskanal (18) durch einen Druckausgleichkanal (23) miteinander verbunden sind.

5. Hydraulisch dämpfende Buchse nach einem der Ansprüche 1 bis 4, **dadurch gekennzeichnet, daß** ein hohlzylinderförmiger Buchsenkäfig (24) vorgesehen ist, der radial abragende, das äußere Lagerteil (11) abstützende Stirnwände aufweist.

6. Hydraulisch dämpfende Buchse nach einem der Anspruch 5, **dadurch gekennzeichnet, daß** der Buchsenkäfig (24) aus mindestens zwei aneinander festgelegten Käfigteilen (24a, 24b) besteht.

7. Hydraulisch dämpfende Buchse nach einem der Ansprüche 1 bis 6, **dadurch gekennzeichnet, daß** ein an dem Buchsenkäfig (24) einsetzbarer Einsatz (25) vorgesehen ist, der einen Entkopplungskäfig (33) zur Aufnahme der Entkopplungsmembran (16a, 16b) aufweist.

8. Hydraulisch dämpfende Buchse nach Anspruch 7, **dadurch gekennzeichnet, daß** der Einsatz (25) sich segmentartig in Umfangsrichtung erstreckt und in einer am Buchsenkäfig (24) vorgesehenen Aussparung aufgenommen ist.

9. Hydraulisch dämpfende Buchse nach Anspruch 7 oder 8, **dadurch gekennzeichnet, daß** der Entkopplungskäfig (33) in Radialrichtung verlaufende beabstandete Streben (26) aufweist.

10. Hydraulisch dämpfende Buchse nach einem der Ansprüche 7 bis 9, **dadurch gekennzeichnet, daß** an dem Einsatz (25) eine Umlenkung (18a) des Dämpfungskanals (18) vorgesehen ist.

11. Hydraulisch dämpfende Buchse nach einem der Ansprüche 1 bis 10, **dadurch gekennzeichnet, daß** der Dämpfungskanal (18) am Außenumfang des Buchsenkäfigs (24) einvulkanisiert ist.

12. Hydraulisch dämpfende Buchse nach einem der Ansprüche 1 bis 11, **dadurch gekennzeichnet, daß** zwei in Axialrichtung beabstandete Entkopplungsmembranen (16a, 16b) vorgesehen sind, denen jeweils eine Entkopplungskammer (17a, 17b) zugeordnet ist.

13. Hydraulisch dämpfende Buchse nach Anspruch 12, **dadurch gekennzeichnet, daß** die Stirnwand des Buchsenkäfigs (24) eine Öffnung (27) aufweist, die von der Abdeckkappe (20) der Entkopplungskammer (17a, 17b) abgedeckt ist.

14. Hydraulisch dämpfende Buchse nach einem der Ansprüche 1 bis 13, **dadurch gekennzeichnet, daß** ein einteiliger Vulkanisatkörper (13) vorgesehen ist, an dem der Federkörper (13a) und/oder der Dämpfungskanal (18) und/oder die Abdeckkappe (20) ausgebildet ist..

15. Hydraulisch dämpfende Buchse nach einem der Ansprüche 1 bis 14, **dadurch gekennzeichnet, daß** das innere Lagerteil (12) gegenüber dem äußeren Lagerteil (11) exzentrisch angeordnet ist.

## Claims

1. A hydraulic damping bush (10) with an outer bearing part (11) and an inner bearing part (12) which are supported relatively to each other by means of a spring body (13a) made of an elastomer material, wherein the spring body (13a) delimits at least one working chamber (14) filled with a hydraulic fluid and connected via a damping channel (18) to at least one compensation chamber (15), and with a decoupling membrane (16a, 16b) which is allocated to the working chamber (14) and charged on both sides with the hydraulic fluid, **characterized in that** the decoupling membrane (16a, 16b) is designed such that it extends in the circumferential direction and projects out radially, that to the decoupling membrane (16a, 16b) a decoupling chamber (17a, 17b) is associated which is offset in axial direction with respect to the working chamber (14), and that the compensation chamber (15) extends at the outer circumference of the bush (10) in the circumferential direction.

2. The hydraulic damping bush according to claim 1, **characterized in that** the decoupling chamber (17a, 17b) has a covering cap (20) made of resilient material.

3. The hydraulic damping bush according to claim 1 or 2, **characterized in that** the decoupling chamber (17a, 17b) has a covering cap (20) with a wave profile.

4. The hydraulic damping bush according to any one of claims 1 to 3, **characterized in that** the decoupling chamber (17a, 17b) and the compensation chamber (15) and/or the damping channel (18) are connected to each other by means of a pressure compensation channel (23).

5. The hydraulic damping bush according to any one of claims 1 to 4, **characterized in that** a hollow-cylindrical bush cage (24) is provided which has radially projecting front walls supporting the outer bearing part (11).

6. The hydraulic damping bush according to claim 5, **characterized in that** the bush cage (24) consists of at least two cage parts (24a, 24b) fixed at each other.

7. The hydraulic damping bush according to any one of claims 1 to 6, **characterized in that** an insert (25) insertable at the bush cage (24) is provided which has a decoupling cage (33) for the reception of the decoupling membrane (16a, 16b).

8. The hydraulic damping bush according to claim 7, **characterized in that** the insert (25) extends segment-like in the circumferential direction and is received in a recess provided at the bush cage (24).

9. The hydraulic damping bush according to claim 7 or 8, **characterized in that** the decoupling cage (33) has spaced-apart struts (26) extending in radial direction.

10. The hydraulic damping bush according to any one of claims 7 to 9, **characterized in that** at the insert (25) there is provided a deflection (18a) of the damping channel (18).

11. The hydraulic damping bush according to any one of claims 1 to 10, **characterized in that** the damping channel (18) is bonded onto the outer circumference of the bush cage (24) by means of vulcanisation.

12. The hydraulic damping bush according to any one of claims 1 to 11, **characterized in that** two decoupling membranes (16a, 16b) being spaced apart in axial direction are provided, to each of which a decoupling chamber (17a, 17b) is associated.

13. The hydraulic damping bush according to claim 12, **characterized in that** the front wall of the bush cage (24) has an opening (27) which is covered by the covering cap (20) of the decoupling chamber (17a, 17b).

14. The hydraulic damping bush according to any one of claims 1 to 13, **characterized in that** a one-piece vulcanisate body (13) is provided at which the spring body (13a) and/or the damping channel (18) and/or the covering cap (20) are formed.

15. The hydraulic damping bush according to any one of claims 1 to 14, **characterized in that** the inner bearing part (12) is arranged eccentrically with respect to the outer bearing part (11).

## Revendications

1. Douille (10) à amortissement hydraulique, comportant une partie de palier extérieure (11) et une partie de palier intérieure (12) qui sont appuyées l'une contre l'autre par un corps élastique (13a) en matériau élastomère, le corps élastique (13a) délimitant au moins une chambre de travail (14) qui est remplie d'un liquide hydraulique et qui est reliée à au moins une chambre de compensation (15) via un canal d'amortissement (18), et comportant une membrane de découplage (16a, 16b) associée à la chambre de travail (14) et sollicitée de part et d'autre par le liquide hydraulique, **caractérisée en ce que** la membrane de découplage (16a, 16b) est réalisée de manière à s'étendre en direction périphérique et à dépasser radialement, **en ce qu'**une chambre de découplage (17a, 17b) décalée en direction axiale par rapport à la chambre de travail (14) est associée à la membrane de découplage (16a, 16b), et **en ce que** la chambre de compensation (15) s'étend en direction périphérique à la périphérie extérieure de la douille (10).

2. Douille à amortissement hydraulique selon la revendication 1, **caractérisée en ce que** la chambre de découplage (17a, 17b) comprend un capuchon de recouvrement (20) en matériau élastique.

3. Douille à amortissement hydraulique selon la revendication 1 ou 2, **caractérisée en ce que** la chambre de découplage (17a, 17b) comprend un capuchon de recouvrement (20) présentant un profil ondulé.

4. Douille à amortissement hydraulique selon l'une des revendications 1 à 3, **caractérisée en ce que** la chambre de découplage (17a, 17b) et la chambre de compensation (15) et/ou le canal d'amortissement (18) sont reliés entre eux par un canal de compensation de pression (23).

5. Douille à amortissement hydraulique selon l'une des revendications 1 à 4, **caractérisée en ce qu'**il est prévu une douille-cage (24) de forme cylindrique creuse qui comprend des parois frontales dépassant radialement et soutenant la partie de palier extérieure (11).

6. Douille à amortissement hydraulique selon la revendication 5, **caractérisée en ce que** la douille-cage (24) est constituée par au moins deux parties de cage (24a, 24b) immobilisées l'une sur l'autre.

7. Douille à amortissement hydraulique selon l'une des revendications 1 à 6, **caractérisée en ce qu'**il est prévu un insert (25) susceptible d'être mis en place sur la douille-cage (24) et comprenant une cage de découplage (33) pour recevoir la membrane de découplage (16a, 16b).

8. Douille à amortissement hydraulique selon la revendication 7, **caractérisée en ce que** l'insert (25) s'étend à la manière d'un segment en direction périphérique et est logé dans une échancrure prévue sur la douille-cage (24).

9. Douille à amortissement hydraulique selon la revendication 7 ou 8, **caractérisée en ce que** la cage de découplage (33) comprend des entretoises espacées (26) s'étendant en direction radiale.

10. Douille à amortissement hydraulique selon l'une des revendications 7 à 9, **caractérisée en ce qu'**une déviation (18a) du canal d'amortissement (18) est prévue sur l'insert (25).

11. Douille à amortissement hydraulique selon l'une des revendications 1 à 10, **caractérisée en ce que** le canal d'amortissement (18) est intégré par vulcanisation sur la périphérie extérieure de la douille-cage (24).

12. Douille à amortissement hydraulique selon l'une des revendications 1 à 11, **caractérisée en ce qu'**il est prévu deux membranes de découplage (16a, 16b) espacées en direction axiale auxquelles est associée une chambre de découplage respective (17a, 17b).

13. Douille à amortissement hydraulique selon la revendication 12, **caractérisée en ce que** la paroi frontale de la douille-cage (24) présente une ouverture (27) qui est recouverte par le capuchon de recouvrement (20) de la chambre de découplage (17a, 17b).

14. Douille à amortissement hydraulique selon l'une des revendications 1 à 13, **caractérisée en ce qu'**il est prévu un corps vulcanisé (13) d'un seul tenant sur lequel est réalisé le corps élastique (13a) et/ou le canal d'amortissement (18) et/ou le capuchon de recouvrement (20).

15. Douille à amortissement hydraulique selon l'une des revendications 1 à 14, **caractérisée en ce que** la partie de palier intérieure (12) est agencée excentriquement par rapport à la partie de palier extérieure (11).
